# EUROPEAN PATENT APPLICATION

(11) **EP 3 995 712 A1**
(43) Date of publication of application: **11.05.2022**
(21) Application number: 20835572.7
(22) Date of filing: 17.06.2020
(51) Int. Cl.: F16C 17/02, F16C 33/12, F16C 33/14

(54) **SINTERED BEARING AND METHOD FOR MANUFACTURING SINTERED BEARING**

(30) Priority: 02.07.2019 JP 2019123635
(71) Applicant: NTN Corporation, Osaka-shi, Osaka 550-0003 (JP)
(72) Inventor: ITO Yoshinori, Ama-gun, Aichi 497-8541 (JP); ASADA Hajime, Ama-gun, Aichi 497-8541 (JP)
(74) Representative: Barth, Michael
(86) International application number: PCT/JP2020/023701
(87) International publication number: WO 2021/002197

(57) **Abstract**

A sintered bearing 1 is formed by sintering a raw material powder containing aluminum fluoride. The sintered bearing 1 has a structure obtained by sintering an aluminum-copper alloy and contains 3 to 13 mass% aluminum and 0.05 to 0.6 mass% phosphorus, copper as a main component of the remainder, and inevitable impurities. The sintered bearing 1 is manufactured by performing sintering in a closed space 23, and by, under the assumption that all aluminum fluoride contained in the raw material powder is gasified in the closed space 23, controlling the concentration of the aluminum fluoride gas to be 5 ppm or more, thus performing the sintering.

## Description

### TECHNICAL FIELD

The present invention relates to a sintered bearing and a method for manufacturing a sintered bearing.

### BACKGROUND ART

As a sintered bearing excellent in corrosion resistance, an aluminum bronze-based sintered bearing described in Patent Literature 1 below is known. In an aluminum bronze-based sintered bearing, an aluminum-copper alloy powder is mainly used as a raw material powder, but when this powder is sintered, sintering is significantly inhibited by a coating of aluminum oxide (Al₂O₃) produced on the particle surface during sintering, which is disadvantageous.

In order to solve the above problem, in the sintered bearing described in Patent Literature 1, aluminum fluoride is added as a sintering aid to a raw material powder. According to the literature, aluminum fluoride gradually evaporates as it melts while the aluminum-copper alloy powder is sintered, and protects the surface of the aluminum-copper alloy powder to suppress production of aluminum oxide, thereby promoting sintering and promoting diffusion of aluminum.

### CITATIONS LIST

### PATENT LITERATURE

Patent Literature 1: WO 2013/137347 A

### SUMMARY OF INVENTION

### TECHNICAL PROBLEMS

The aluminum bronze-based sintered bearing described above is used for, for example, a fuel pump for an engine of an automobile. In recent years, along with the demand for downsizing and lightweighting of an engine, downsizing and lightweighting of a fuel pump are required, and compactness (a smaller diameter or thinner thickness, or both) of a sintered bearing incorporated in the fuel pump is also required.

However, it has been found that, when the aluminum bronze-based sintered bearing is made compact as described above, the strength is decreased more than predicted. The cause thereof is unknown, and investigation for the cause of the problem and a solution to the problem are strongly required.

Therefore, an object of the present invention is to be able to stably secure the strength of an aluminum bronze-based sintered bearing.

### SOLUTIONS TO PROBLEMS

In order to solve the problem, the present invention is a sintered bearing including a sintered body that has a structure obtained by sintering an aluminum-copper alloy and contains 3 to 13 mass% aluminum and 0.05 to 0.6 mass% phosphorus, copper as a main component of the remainder, and inevitable impurities, the sintered bearing having no aluminum oxide coating at a grain boundary in a core portion and having a radial crushing strength of 200 MPa or more.

The above sintered bearing preferably has a hardness of HRF 30 or more.

In addition, the sintered bearing preferably has a density of 5.6 g/cm³ or more and 6.2 g/cm³ or less.

Further, the sintered bearing preferably has free graphite.

In addition, the present invention is a method for manufacturing a sintered bearing that has a structure obtained by sintering an aluminum-copper alloy and contains 3 to 13 mass% aluminum and 0.05 to 0.6 mass% phosphorus, copper as a main component of the remainder, and inevitable impurities, the method including sintering a raw material powder containing aluminum fluoride to form the sintered bearing, in which the sintering is performed in a closed space, and under the assumption that all aluminum fluoride contained in the raw material powder is gasified in the closed space, the concentration of the aluminum fluoride gas is controlled to perform the sintering.

In the above case, it is preferable that the concentration of the aluminum fluoride gas is controlled to be 5 ppm or more, thus performing the sintering.

In the above manufacturing method, it is preferable that a plurality of green compacts is placed in the closed space, and a proportion of the total volume of the plurality of green compacts to the volume of the closed space is set to 5% or more to perform the sintering.

In addition, it is preferable that the closed space is formed with a container body capable of accommodating the plurality of green compacts and a lid capable of detachably attaching to the container body.

Further, the raw material powder preferably contains 0.05 to 0.3 mass% of the aluminum fluoride.

### ADVANTAGEOUS EFFECTS OF INVENTION

According to the present invention, it is possible to provide a sintered bearing having high mechanical strength while having high corrosion resistance.

### BRIEF DESCRIPTION OF DRAWINGS

FIG. 1 is a cross-sectional view illustrating a sintered bearing.
FIG. 2 is a cross-sectional view illustrating a sintering furnace.
FIG. 3A is a plan view of a container.
FIG. 3B is a cross-sectional view taken along the line D-D in FIG. 3A.
FIG. 4A is a schematic diagram illustrating an enlarged microstructure of a portion A in FIG 1.
FIG. 4B is a schematic diagram illustrating an enlarged microstructure of a portion B in FIG. 1.
FIG. 4C is a schematic diagram illustrating an enlarged microstructure of a portion C in FIG. 1.
FIG. 5 is a graph showing the relationship between the aluminum fluoride concentration and the radial crushing strength.
FIG. 6 is a graph showing the relationship between the aluminum fluoride concentration and the radial crushing strength.
FIG. 7 is a graph showing the relationship between the volume proportion and the radial crushing strength.
FIG. 8 is a graph showing the relationship between the volume proportion and the radial crushing strength.

### DESCRIPTION OF EMBODIMENT

Hereinafter, an embodiment of the present invention will be described with reference to the accompanying drawings.

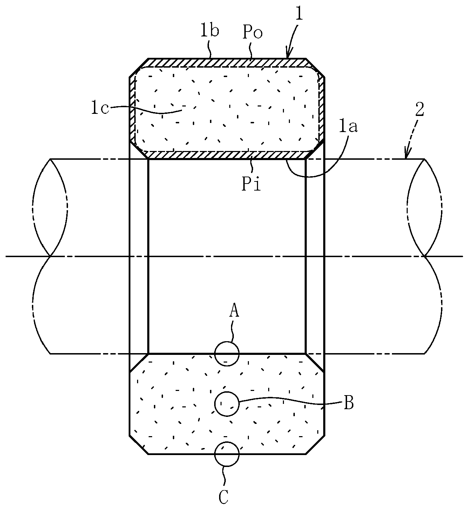

As illustrated in FIG. 1, a sintered bearing 1 of the present embodiment is formed of a cylindrical porous body having a bearing surface 1a on the inner periphery. When a shaft 2 is inserted into the inner periphery of the sintered bearing 1 and the shaft 2 is rotated in this state, a lubricating oil held in the countless pores of the sintered bearing 1 oozes out on the bearing surface 1a as the temperature rises. The oozed lubricating oil allows an oil coating to be formed in the bearing clearance between the circumference surface of the shaft 2 and the bearing surface 1a, and the shaft 2 is supported by the bearing 1 so as to be relatively rotatable.

The sintered bearing 1 of the present embodiment is formed by filling a mold with a raw material powder that is a mixture of various powders, compressing the raw material powder to form a green compact, sintering the green compact, and then performing sizing and impregnation with a lubricating oil as necessary.

A raw material powder of the present embodiment is a mixed powder obtained by mixing an aluminum-copper alloy powder, a phosphorus-copper alloy powder, a graphite powder, and aluminum fluoride and calcium fluoride as sintering aids. Details of each powder will be described below.

### [Aluminum-copper alloy powder]

As the aluminum-copper alloy powder, a powder is used that is obtained by pulverizing a complete alloy powder of copper and aluminum and then adjusting the particle size. Specifically, a 7 to 17 mass% aluminum-copper alloy powder, preferably an 8.5 to 12 mass% aluminum-copper alloy powder can be used. The use of the alloyed powder eliminates a problem in handling due to scattering of an aluminum simple substance powder having a small specific gravity. The aluminum-copper alloy powder has a particle size of 100 µm or less and an average particle size of about 35 µm.

The average particle size can be measured based on, for example, a laser diffraction scattering method. In this measurement method, particles are irradiated with laser light, and a particle size distribution and even an average particle size are determined by calculation from an intensity distribution pattern of diffracted/scattered light emitted from the particles. As an apparatus for measuring the average particle size, for example, SALD-3100 manufactured by Shimadzu Corporation can be used.

As the amount of aluminum in the aluminum-copper alloy powder increases, the proportion of the β phase increases. The β phase undergoes eutectoid transformation at 565 °C to become the α phase and the γ phase, and thereby the γ phase generated in the sintered body increases as the amount of aluminum increases. Because the γ phase decreases corrosion resistance to organic acids contained in engine oil, gasoline, light oil, and the like, and ammonia and the like contained in exhaust gas, it is not preferable to excessively increase the amount of aluminum. On the other hand, if the content of aluminum is too small, merits as an aluminum bronze sintered bearing (particularly, wear resistance) cannot be obtained. Therefore, the content of aluminum in the sintered bearing 1 is set to 3 mass% to 13 mass% and preferably 8.5 mass% to 12 mass%.

### [Phosphorus alloy powder]

As the phosphorus alloy powder, a phosphorus-copper alloy powder, for example, a 7 to 10 mass% phosphorus-copper alloy powder is used. Phosphorus has an effect of enhancing wettability between the solid phase and the liquid phase during sintering, and promoting sintering of the aluminum-copper alloy in the sintering process. The content of phosphorus in the sintered bearing is 0.05 to 0.6 mass% and preferably 0.1 to 0.4 mass%. If the content of phosphorus is less than 0.05 mass%, the effect of promoting sintering between the solid-liquid phases is poor, and if the content of phosphorus is more than 0.6 mass%, sintering proceeds excessively to increase precipitation of the γ phase, so that the sintered body becomes brittle.

### [Graphite powder]

Graphite mainly exists as free graphite in pores dispersed and distributed in the base material, imparts excellent lubricity to the sintered bearing, and contributes to improvement of wear resistance. The blending amount of graphite is 3 to 10 mass% (3 to 10 parts by mass) and preferably 3 to 6 mass% (3 to 6 parts by mass) with respect to 100 mass% (100 parts by mass) of the total of the aluminum-copper alloy powder and the phosphorus alloy powder. If the blending amount is less than 3 mass% (3 parts by mass), the effect of improving lubricity and wear resistance by graphite addition cannot be obtained. On the other hand, if the blending amount is more than 10 mass% (10 parts by mass), the diffusion of aluminum into copper is inhibited, leading to a decrease in strength. By using a granulated graphite powder as the graphite powder, it is possible to prevent deterioration of moldability caused when 4 mass% (4 parts by mass) or more of the graphite powder is added to the raw material powder. The granulated graphite powder is obtained by granulating a fine powder of natural graphite or artificial graphite with a resin binder and then pulverizing the granulated powder. As the graphite powder, a graphite powder having a particle size of 145 mesh or less is preferably used.

### [Aluminum fluoride]

While sintering the aluminum-copper alloy powder, a coating of aluminum oxide produced on the particle surface significantly inhibits the sintering. A powder of aluminum fluoride (AlF₃) gradually evaporates as it melts at 880°C to 1000°C, which is sintering temperature for the aluminum-copper alloy powder, and protects the surface of the aluminum-copper alloy powder to suppress the production of aluminum oxide, thereby promoting sintering and promoting diffusion of aluminum. Aluminum fluoride evaporates and volatilizes during sintering, and thus hardly remains in a sintered body after the sintering. The blending percentage of aluminum fluoride in the raw material powder is preferably 0.05 to 0.3 mass% (0.05 to 0.3 parts by mass) with respect to 100 mass% (100 parts by mass) of the total of the aluminum-copper alloy powder and the phosphorus alloy powder. If the blending amount of aluminum fluoride is less than 0.05 mass% (0.05 parts by mass), it is difficult to suppress the production of aluminum oxide. If the blending amount of aluminum fluoride is more than 0.3 mass% (0.3 parts by mass), the effect of suppressing the production of aluminum oxide is saturated (when an 8.5 to 12 mass% aluminum-copper alloy powder is used).

### [Calcium fluoride]

Calcium fluoride (CaF₂) acts like a catalyst under coexistence of phosphorus, and contributes to promotion of sintering, for example, as a sintering aid for aluminum fluoride. The blending percentage of calcium fluoride is preferably about 0.01 to 0.2 mass% (0.01 to 0.2 parts by mass) with respect to 100 mass% of the total of the aluminum-copper alloy powder and the phosphorus alloy powder. If the blending amount of calcium fluoride is less than 0.01 mass% (0.01 parts by mass), it is difficult to obtain its effect as the sintering aid for aluminum fluoride. If the blending amount of calcium fluoride is over 0.2 mass% (0.2 parts by mass), calcium fluoride remains in a sintered body as calcium fluoride particles.

Next, a method for manufacturing the sintered bearing 1 will be described. The sintered bearing 1 of the present embodiment is manufactured through a raw material powder preparation step, a powder compaction step, a sintering step, a sizing step, and an oil impregnation step.

### [Raw material powder preparation step S1]

In the raw material powder preparation step S1, the raw material powder of the sintered bearing 1 is prepared and produced. For producing the raw material powder, powders are blended and mixed so as to obtain a sintered body containing 3 to 13 mass% aluminum and 0.05 to 0.6 mass% phosphorus, and copper and carbon as main components of the remainder, and further containing inevitable impurities. For example, a mixture is used as a raw material powder, the mixture being obtained by adding 3 to 6 mass% (3 to 6 parts by mass) of graphite powder, 0.05 to 0.3 mass% (0.05 to 0.3 parts by mass) of aluminum fluoride, 0.01 to 0.2 mass% (0.01 to 0.2 parts by mass) of calcium fluoride, and 0.1 to 1.0 mass% (0.1 to 1.0 parts by mass) of zinc stearate as a lubricant for facilitating moldability to 100 mass% (100 parts by mass) of the total of 90 to 97 mass% (90 to 97 parts by mass) of the above-described aluminum-copper alloy powder and 3 to 10 mass% (3 to 10 parts by mass) of the above-described phosphorus-copper alloy powder.

### [Powder compaction step]

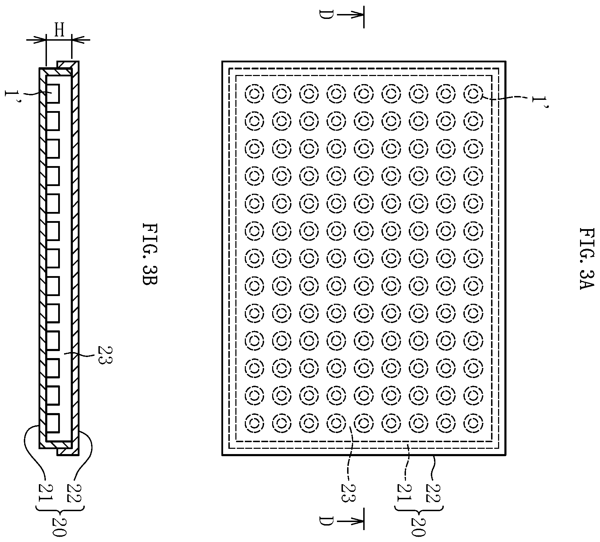

In the powder compaction step, the above raw material powder is compression-molded, thereby forming a green compact 1' having a shape corresponding to the shape of the sintered bearing 1 (FIGs. 3A and 3B).

Specifically, for example, a molding die formed by defining a cavity following a green compact shape is set in a CNC press machine with a servo motor as a drive source, and the raw material powder filled in the cavity is compressed at a pressure of 200 to 700 MPa, thereby molding the green compact 1'. When molding the green compact 1', the molding die may be heated to 70°C or higher.

In the method for manufacturing the sintered bearing 1 described above, since the aluminum-copper alloy powder is used as an aluminum source and an aluminum simple substance powder is not used, it is possible to avoid a problem in handling due to scattering of aluminum simple substance particles having a small specific gravity in the powder compaction step. In addition, since a copper simple substance powder is not added, a portion where the copper simple substance is biased in a sintered body is substantially eliminated, and occurrence of corrosion due to such a portion is avoided. Therefore, the corrosion resistance of the sintered bearing 1 is improved.

### [Sintering step]

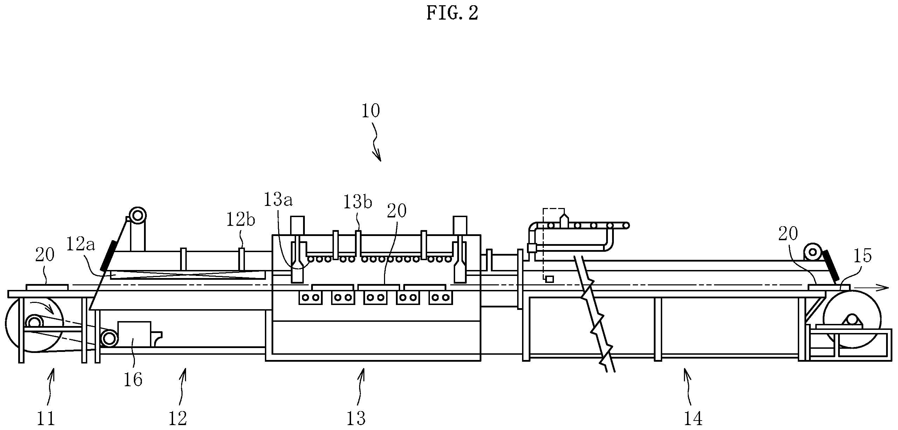

In the sintering step, the green compact is heated at a sintering temperature, and adjacent raw material powder particles are sinter-bonded to each other, thereby forming a sintered body. As a sintering furnace for sintering, for example, a mesh belt type continuous furnace 10 illustrated in FIG. 2 can be used.

The sintering furnace 10 has a configuration in which a feeding unit 11, a preheating unit 12, a heating unit 13, and a cooling unit 14 are sequentially disposed along a conveyance direction (a direction indicated by an arrow described on an extension line of a two-dot chain line in the drawing). A mesh belt 15 as a conveyance device is stretched from the feeding unit 11 as the inlet of the furnace 10 to a terminal of the cooling unit 14 as the outlet of the furnace 10. The mesh belt 15 is driven by a drive source 16, and thereby the green compact is continuously conveyed in the arrow direction and sequentially passes through the respective units 11 to 14.

The preheating unit 12 and the heating unit 13 are provided with heating elements 12a and 13a respectively, and supply ports 12b and 13b respectively for supplying atmospheric gas into the furnace. In the preheating unit 12, the lubricant such as zinc stearate contained in the green compact is removed (dewaxed) by heating, and in the heating unit 13, the preheated green compact is sintered. As an atmospheric gas in the furnace 10, hydrogen gas, nitrogen gas, or a mixed gas thereof is used. The sintering temperature is preferably in the range of 880 to 1000°C (preferably 920°C to 980°C). In addition, the sintering time is preferably about 10 to 60 minutes for the sum of both the preheating unit 12 and the heating unit 13.

In the present embodiment, the green compact 1' is accommodated in a sealed container 20. The containers 20 are successively supplied onto the mesh belt 15, and the containers 20 are sequentially conveyed to the respective units 11 to 14 in the furnace 10, whereby the green compacts in the containers 20 are sintered. As the container 20, as illustrated in FIGs. 3A and 3B, a lidded tray having a tray 21 (also referred to as a board) as a container main body and a lid 22, for example, can be used. A plurality of green compacts 1' is placed on the tray 21, and then the lid 22 is fitted to the upper opening of the tray 21, whereby a closed space 23 shielded from the outside air is formed inside the lidded tray 20. The sintering step in the present embodiment is performed in a state where the green compacts 1' are accommodated in the closed space 23 inside the container 20 as described above. Incidentally, the tray 21 and the lid 22 can be formed with stainless steel, for example.

During temperature rise along with sintering, a coating of aluminum oxide (Al₂O₃) is formed on the surface of an aluminum-copper alloy particle. Since the aluminum oxide coating inhibits sintering, the above state would lead to insufficient sintering (insufficient neck strength). The aluminum fluoride added as a countermeasure for the above is gasified (sublimated) from around 600°C to react with the aluminum oxide coating, which produces a gas phase of AlOF according to the following reaction formula.

Al₂O₃(s) + AlF₃(g) = 3AlOF(g)

Through the above reaction, the aluminum oxide coating is disrupted and removed. As a result, sintering between adjacent aluminum-copper alloy structures smoothly proceeds, and the neck strength between the structures increases, so that a high-strength sintered body is obtained.

### [Sizing step]

In the sizing step, the sintered body expanded by sintering as compared with the green compact 1' is compressed in the axial direction and the radial direction to be dimensionally shaped. By the sizing processing, pores in the surface layer of the expanded sintered body are crushed, and a density difference is generated between the core portion and the surface layer portion. Therefore, after the sizing processing, as illustrated in FIG. 1, the surface layer portion (hatched region) of the sintered bearing 1 is a compressed layer, and the density of a compressed layer Po in a surface layer portion on an outer surface 1b side and the density of a compressed layer Pi in a surface layer portion on a bearing surface 1a side are both higher than the density of a core portion 1c.

### [Oil impregnation step]

The oil impregnation step is a step of impregnating a product 1 (sintered bearing) with a lubricating oil. The product 1 is fed into a tank of an oil impregnation device, and then the lubricating oil is injected into the tank. Then, the inside of the tank is depressurized to impregnate the pores of the product 1 with the lubricating oil. As a result, since the lubricating oil is held in respective pores of the porous sintered bearing, an excellent lubricating state can be obtained from the start of operation. As the lubricating oil, mineral oil, poly-α-olefin (PAO), ester, liquid grease, or the like can be used. However, the oil impregnation step may be performed according to the intended use of the bearing, and the oil impregnation step may be omitted depending on the use.

The sintered bearing 1 illustrated in FIG. 1 is completed through the above steps. The sintered bearing 1 has a structure obtained by sintering the aluminum-copper alloy and contains 3 to 13 mass% aluminum and 0.05 to 0.6 mass% phosphorus, copper and carbon as main components of the remainder, and inevitable impurities.

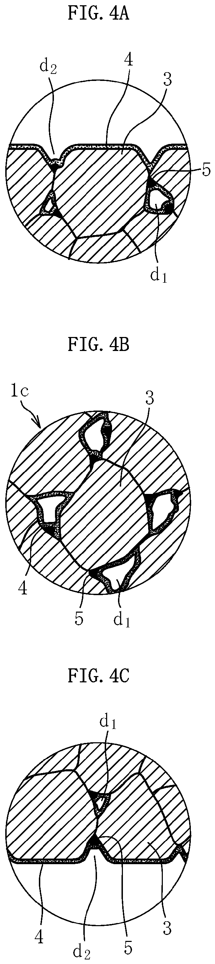

The sintered bearing 1 has a microstructure schematically illustrated in FIGs. 4A, 4B, and 4C. Note that, FIG. 4A is an enlarged view of a portion A in FIG. 1, FIG. 4B is an enlarged view of a portion B in FIG. 1, and FIG. 4C is an enlarged view of a portion C in FIG. 1.

In FIGs. 4A to 4C, a hatched region 3 is an aluminum-copper alloy structure. Since the aluminum-copper structure 3 is a complete alloy structure, the ratio (weight ratio) of aluminum to copper is constant in any portion of the aluminum-copper structure 3. In the aluminum-copper alloy structure 3, an aluminum oxide coating 4 exists on the surface in contact with the outside air and around an internal pore d₁ communicating with the outside air. Thereby, corrosion resistance and wear resistance are imparted to the sintered bearing 1. In the internal pore d₁ and surface pore d₂, free graphite 5 is distributed, whereby lubricity and wear resistance can be obtained.

In addition, in the present embodiment, since a copper simple substance powder is not added to the raw material powder, a portion where the copper simple substance is biased in the sintered body is substantially eliminated, and occurrence of corrosion due to such a portion is avoided. Although not illustrated, phosphorus exists at the grain boundary of the adjacent aluminum-copper alloy structures 3. The phosphorus allows the wettability between the solid phase and the liquid phase to increase during sintering, and thereby the bonding strength between the particles is increased and the strength of the sintered body can be enhanced. The aluminum fluoride all evaporates and volatilizes along with sintering, almost no aluminum fluoride remains in the sintered body, but calcium fluoride may remain in the sintered body in some cases. The calcium fluoride remaining in the sintered body can function as a solid lubricant.

In the embodiment described above, a copper simple substance powder is not added to the raw material powder, but the copper simple substance powder can also be added as necessary. In this case, in the sintered body, a structure of copper simple substance is formed in addition to an aluminum-copper alloy structure, a phosphorus-copper alloy structure, an aluminum-phosphorus-copper alloy structure, and a graphite structure. The sintered body of the present embodiment contains aluminum and phosphorus, and copper as a main component of the remainder, but other elements other than Cu may be added to the mentioned "remainder" to the extent that required corrosion resistance and mechanical strength are not impaired. Examples of other elements may include any one or two or more of Si, Sn, Ni, Zn, Fe, Mn, and the like. However, respective contents of the above other elements in the sintered body should be less than the contents of copper and aluminum. In addition, depending on the sintering conditions, a small amount of calcium fluoride that cannot evaporate may remain in the sintered body, but the contents of F and Ca in the sintered body in this case should also be less than the contents of copper and aluminum.

As already mentioned, it has been found that, when the aluminum bronze-based sintered bearing 1 is made compact, the strength of the sintered body is often lower than the strength to be estimated. From the results of various verifications, it has become clear that this phenomenon is caused by insufficient action of aluminum fluoride as a sintering aid for the following reason.

As already mentioned, in the closed space 23 in the container 20, aluminum fluoride gasified during sintering and aluminum oxide react with each other to produce AlOF gas. As the sintered bearing 1 is made compact, when the number of green compacts accommodated in the container 20 is the same as the number of green compacts before being made compact, the remaining volume of the closed space 23 (a value obtained by subtracting the total volume of the green compacts 1' from the volume of the closed space 23) relatively increases. Thereby, the concentration of the gasified aluminum fluoride (the concentration of the AlOF gas) decreases, so that the reaction between aluminum fluoride and aluminum oxide is not sufficiently performed, and aluminum oxide remains at the grain boundary. Therefore, proceeding of sintering is impaired, and the strength of the sintered body is decreased.

Based on the above verification result, in the present embodiment, the green compacts 1' are sintered in the closed space 23 shielded from the outside air, and under the assumption that all aluminum fluoride contained in the raw material powder is gasified in the closed space 23, the concentration (estimated concentration) of the aluminum fluoride gas is controlled to perform sintering. The above concentration is calculated from, when a predetermined number of green compacts 1' (the number of green compacts placed in the tray 20 in an actual sintering step) are placed in the tray, the remaining volume of the closed space 23 (a value obtained by subtracting the total volume of the green compacts 1' from the volume of the closed space 23), and the total amount of aluminum fluoride existing in the closed space 23. The "control of the concentration" in the present embodiment includes determining the total amount of aluminum fluoride in the closed space 23 (the content of aluminum fluoride in green compacts 1') in consideration of the remaining volume, or determining the volume of the closed space 23 in consideration of the total amount of aluminum fluoride in the closed space 23. That is, the "control of the concentration" means that one of the remaining volume of the closed space 23 and the amount of aluminum fluoride in the closed space 23 is determined in consideration of the other.

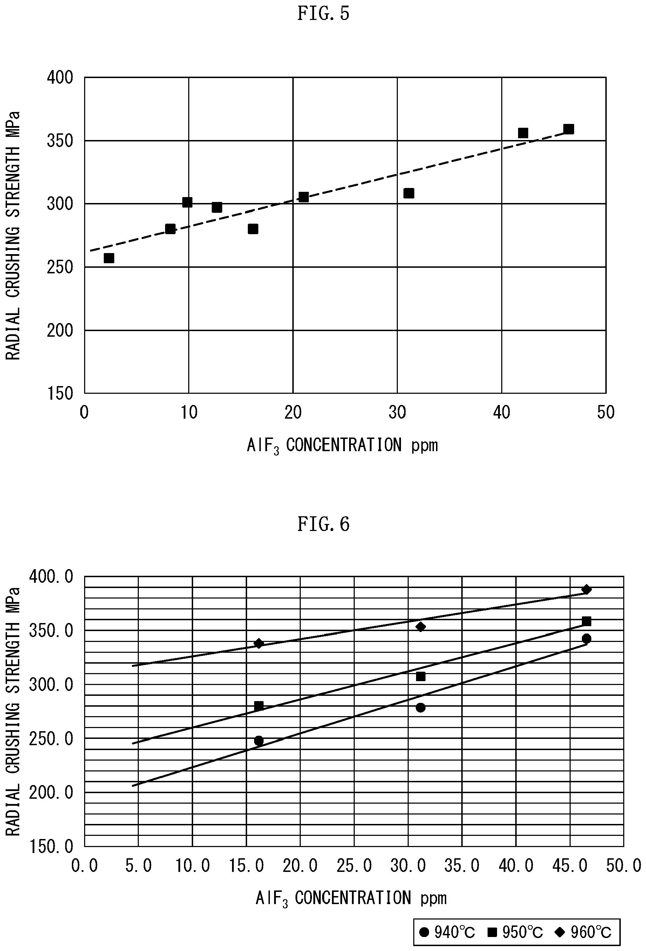

FIG. 5 shows the measurement results of the radial crushing strength (defined in JIS Z 2507) of sintered bodies that were sintered under the conditions in which concentrations of aluminum fluoride described above were different. The sintering temperature for a test piece (sintered body) is 950°C, and the test piece has a size of about ϕ 6 mm in inner diameter, about ϕ 10 mm in outer diameter, and about 6 mm in length. The test piece has a volume of 0.2971 cm³ and a mass of 1.72 to 1.82 g.

From the results shown in FIG. 5, it can be understood that the radial crushing strength of the sintered body increases as the concentration of aluminum fluoride increases. Therefore, it is preferable to increase the concentration of aluminum fluoride as much as possible. In order to increase the concentration of aluminum fluoride, it is necessary to increase the content of aluminum fluoride or reduce the volume of the closed space, but in the former case (the content of aluminum fluoride is increased), the blending amount of aluminum fluoride is changed according to a product size, and different blending amounts of materials are required for respective product sizes, so that control becomes difficult. Therefore, in order to increase the concentration of aluminum fluoride, it is more realistic to reduce the volume of the closed space 23. The volume of the closed space 23 is preferably reduced by reducing the height dimension H (see FIG. 3B) of the closed space 23 from the viewpoint of securing productivity and the like.

FIG. 6 shows the measurement results of the radial crushing strength when the same test as described above was performed at different sintering temperatures for sintered bodies.

From the results shown in FIG. 6, it is understood that the radial crushing strength of the sintered body increases as the sintering temperature is higher, and even at a sintering temperature of 940°C of a low temperature side, it is possible to secure the radial crushing strength of 200 MPa or more as long as the concentration (estimated concentration) of aluminum fluoride in the closed space 23 is 5.0 ppm or more. It can also be understood that the radial crushing strength of 250 MPa or more, or even 300 MPa or more is obtained when the concentration of aluminum fluoride is increased. Here, the radial crushing strength of 200 MPa is often required as a minimum required strength in many applications of the sintered bearing 1. Therefore, the concentration of aluminum fluoride is set to a numerical value of 5.0 ppm or more, preferably 10 ppm or more, and more preferably 15 ppm or more so that the minimum radial crushing strength can be secured even in low-temperature sintering. The upper limit of the concentration of aluminum fluoride is equal to or less than the saturation concentration in the closed space 23.

The hardness of respective test pieces used in the above test was measured. The result was that the Rockwell hardness HRF was 30 or more (substantially 40 or more) and 110 or less (substantially 100 or less, more substantially 90 or less, and still more substantially 70 or less), and it was confirmed that the sintered bodies also had sufficient hardness. In addition, the density of respective test pieces was measured, and it was also confirmed that the density was 5.6 g/cm³ or more and 6.2 g/cm³ or less.

By performing sintering under the conditions described above, as illustrated in FIGs. 4A, 4B, and 4C, the aluminum oxide coating 4 is reliably removed from the grain boundary of adjacent aluminum-copper alloy structures 3 in the core portion 1c and does not exist at this grain boundary. Thereby, sintering between the aluminum-copper alloy structures 3 can sufficiently proceed, and the neck strength between the aluminum-copper alloy structures 3 can be increased, so that stably improving the strength of the sintered body is possible.

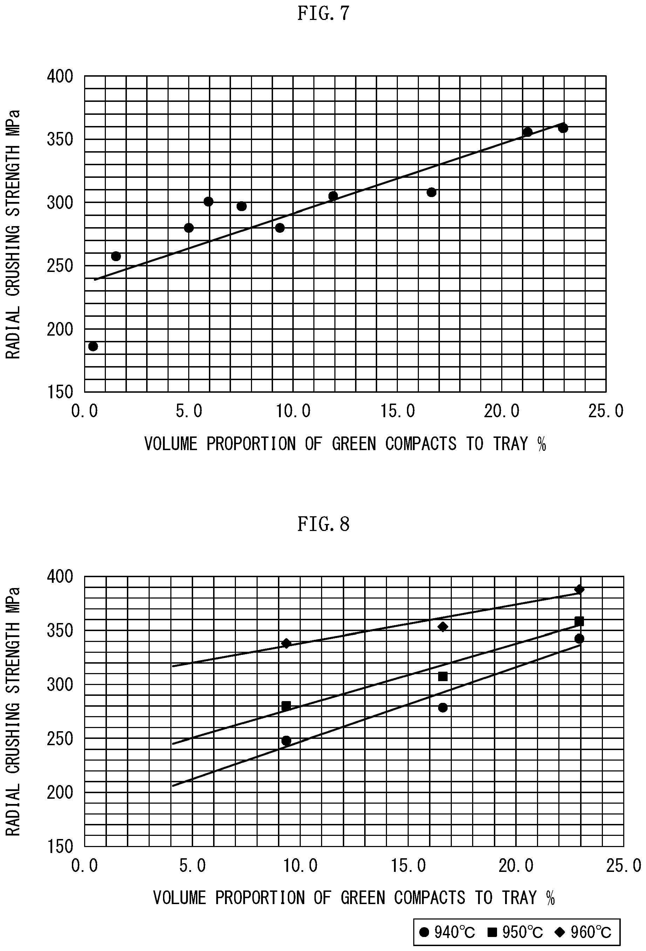

Next, FIGs. 7 and 8 shows the measurement results of the radial crushing strength when sintering was performed for different proportions of the total volume of green compacts (hereinafter, simply referred to as "volume proportion") to the volume of the closed space 23 (the volume in a state where no green compacts are accommodated). The test pieces used in the above test were used. Note that, FIG. 7 shows the radial crushing strength when the sintering temperature for the test pieces was 950°C, and FIG. 8 shows the radial crushing strength when the sintering temperature for the test pieces was three levels of 940°C, 950°C, and 960°C in comparison.

From FIGs. 7 and 8, it is understood that the radial crushing strength is enhanced as the volume proportion increases, and the radial crushing strength of at least 200 MPa or more is obtained as long as the volume proportion is 5.0% or more. Therefore, the volume proportion is preferably set to 5% or more (preferably 10% or more and more preferably 15% or more).

The aluminum bronze-based sintered bearing 1 of the present embodiment can achieve both corrosion resistance and mechanical strength at high levels even at high temperature. The sintered bearing 1 is widely applicable to applications requiring these properties. Therefore, the sintered bearing 1 can be used as auxiliaries placed close to an automobile engine, specifically, a sintered bearing for a fuel pump, which is required to have corrosion resistance to organic acid corrosion and sulfurization corrosion when brought into contact with gasoline or light oil; a sintered bearing for an exhaust gas circulation device (EGR), which is required to have corrosion resistance to exhaust gas and engine oil at high temperature; or a sintered bearing for a turbocharger. In addition to the above, the sintered bearing 1 can also be used as, for example, a reel bearing for fishing tackle.

In addition, in the above description, the case is exemplified where the sintered bearing 1 is applied to a cylindrical bearing having the bearing surface 1a with a perfect circular shape. However, without being limited to the cylindrical bearing, the sintered bearing 1 can also be used as a fluid dynamic bearing in which a dynamic pressure generating portion such as a herringbone groove or a spiral groove is provided on the bearing surface 1a or the outer circumference surface of the shaft 2.

Incidentally, in the above embodiment, the case where the continuous sintering furnace 10 is used is exemplified, but a batch type sintering furnace can be used instead. In addition, a closed space that is closed by a shutter or the like may be formed in a furnace, and the green compacts 1' may be directly fed into the closed space without using the container 20 in the closed space. For this case, by controlling the concentration of aluminum fluoride in the closed space, the same effect as described above can be obtained. In this case, the concentration of the aluminum fluoride gas may be controlled while an aluminum fluoride gas is supplied from the outside of the furnace to the closed space.

### REFERENCE SIGNS LIST

- 1: Sintered bearing
- 1a: Bearing surface
- 1c: Core portion
- 1': Green compact
- 2: Shaft
- 3: Aluminum-copper alloy structure
- 4: Aluminum oxide coating
- 5: Graphite
- 10: Sintering furnace
- 20: Container (lidded tray)
- 21: Tray
- 22: Lid
- 23: Closed space

## Claims

1. A sintered bearing comprising a sintered body that has a structure obtained by sintering an aluminum-copper alloy and contains 3 to 13 mass% aluminum and 0.05 to 0.6 mass% phosphorus, copper as a main component of a remainder, and inevitable impurities,
the sintered bearing having no aluminum oxide coating at a grain boundary in a core portion and having a radial crushing strength of 200 MPa or more.

2. The sintered bearing according to claim 1, having a hardness of HRF 30 or more.

3. The sintered bearing according to claim 1 or 2, having a density of 5.6 g/cm³ or more and 6.2 g/cm³ or less.

4. The sintered bearing according to any one of claims 1 to 3, further comprising free graphite.

5. A method for manufacturing a sintered bearing that has a structure obtained by sintering an aluminum-copper alloy and contains 3 to 13 mass% aluminum and 0.05 to 0.6 mass% phosphorus, copper as a main component of a remainder, and inevitable impurities,
the method comprising sintering a raw material powder containing aluminum fluoride to form the sintered bearing,
wherein the sintering is performed in a closed space, and under an assumption that all the aluminum fluoride contained in the raw material powder is gasified in the closed space, concentration of an aluminum fluoride gas is controlled to perform the sintering.

6. The method for manufacturing the sintered bearing according to claim 5, wherein the concentration of the aluminum fluoride gas is controlled to be 5 ppm or more, thus performing the sintering.

7. The method for manufacturing the sintered bearing according to claim 5 or 6, wherein a plurality of green compacts is placed in the closed space, and a proportion of a total volume of the plurality of green compacts to a volume of the closed space is set to 5% or more to perform the sintering.

8. The method for manufacturing the sintered bearing according to any one of claims 5 to 7, wherein the closed space is formed with a container body capable of accommodating the plurality of green compacts and a lid capable of detachably attaching to the container body.

9. The method for manufacturing the sintered bearing according to any one of claims 5 to 8, wherein the raw material powder contains 0.05 to 0.3 mass% of the aluminum fluoride.
